# EUROPÄISCHE PATENTSCHRIFT

(11) **EP 2 006 136 B1**
(45) Veröffentlichungstag und Bekanntmachung des Hinweises auf die Patenterteilung: **06.06.2012**
(21) Anmeldenummer: 08009689.4
(22) Anmeldetag: 28.05.2008
(51) Int. Cl.: B60J 7/00

(54) **Flexible Schutzabdeckung**
Flexible protective covering
Recouvrement de protection flexible

(30) Priorität: 18.06.2007 DE 102007029290
(43) Veröffentlichungstag der Anmeldung: 24.12.2008
(60) Teilanmeldung: 12155401.8
(73) Patentinhaber: BOS GmbH & Co. KG, 73760 Ostfildern (DE)
(72) Erfinder: Stark, Wolfgang, 73770 Denkendorf (DE)
(74) Vertreter: Patentanwälte Ruff, Wilhelm, Beier, Dauster & Partner

(56) Entgegenhaltungen:
- DE-A1-102005 030 973
- US-A- 5 201 563

## Beschreibung

Die Erfindung betrifft ein Schutzblendensystem nach dem Oberbegriff von Anspruch 1.

Als flexibles Flächengebilde ausgebildete Schutzblenden sind allgemein bekannt. Sie finden als Sonnenblenden ausgebildet insbesondere im Bereich eines Fahrzeugdaches bei Fahrzeugen Verwendung, bei denen das Fahrzeugdach zumindest abschnittsweise offen oder transparent gestaltet ist. Zu solchen Fahrzeugen gehören beispielsweise Fahrzeug mit großem Panoramadach, Fahrzeuge mit Targadach und Fahrzeuge mit einem Schiebedach. Als Sonnenblenden ausgebildete Schutzblenden sind dabei üblicherweise derart ausgestaltet, dass sie in einen Stauzustand, in dem sie vollständig oder teilweise aus dem Bereich des offenen Fahrzeugdachs herausgeschoben sind, und einem Funktionszustand, in dem sie das Fahrzeugdach bedecken, verschiebbar ausgebildet sind. Im Funktionszustand vermindern als Sonnenblenden ausgebildete Schutzblenden die Einstrahlung von Sonnenlicht. So ist beispielsweise bei Fahrzeugen mit Targadach ein offenes Fahrerlebnis möglich, ohne dass die Sonneneinstrahlung ein störendes Maß erreicht. Ebenso finden Schutzblenden im Bereich eines Gepäckstauraums eines Fahrzeugs Verwendung, insbesondere bei Kombi-Fahrzeugen. Sie dienen dabei insbesondere als Sichtschutz, um Einblick von außen in den Gepäckstauraum zu verhindern.

Die Führung Schutzblenden erfolgt üblicherweise dadurch, dass die Schutzblenden beidseitig im Fahrzeuginnenraum gehalten werden und in Fahrzeuglängsrichtung verschiebbar sind. Bei Sonnenblenden werden sie beispielsweise im Bereich des Fahrzeugdachs gehalten und erstrecken sich in Fahrzeugquerrichtung über den Fahrgastbereich hinüber. Hierzu sind an Schutzblenden Befestigungsmittel vorgesehen, wie beispielsweise Randabschnitte, die in Führungseinrichtungen geführt werden.

Als nachteilig an den genannten Schutzblenden wird angesehen, dass sie dazu neigen, durch äußere Einflüsse, wie Hitze und Kälte sowie durch die Belastung durch den Fahrtwind und anderweitige mechanische Belastungen, gestreckt und gedehnt zu werden, so dass sie nach einiger Zeit in unattraktiver und die Funktionalität einschränkender Weise in den Fahrzeuginnenraum bzw. den Gepäckraum durchhängen.

Um dieses Problem zu lösen, ist bereits vorgeschlagen worden, zumindest einseitig die Führungsmittel, an denen das flexible Flächengebilde befestigt ist, elastisch auslenkbar zu machen, so dass das flexible Flächengebilde in seiner Gesamtheit in Fahrzeugquerrichtung gespannt wird. Die technische Realisierung ist jedoch teuer und im Hinblick auf die Fehleranfälligkeit noch nicht zufriedenstellend.

Aus der DE 102005030973 A1 ist ein Schutzblendensystem mit einer Rollobahn bekannt, bei dem an den Seitenrändern der Rollobahn separate elastische Streifen vorgesehen sind, die wiederum mit Führungselementen zur Führung in einer Führungsschiene vorgesehen sind.

Aus der US 5,201,563 ist ein Schutzblendensystem für eine Windschutzscheibe eines Fahrzeugs bekannt, welches ein Flächengebilde mit zwischen unelastischen Steifen angeordneten elastische Streifen aufweist, um der Formgebung einer Windschutzscheibe folgend am unteren Ende derselben aufgeweitet werden zu können.

### Aufgabe und Lösung

Aufgabe der Erfindung ist daher, ein Schutzblendensystem mit einer Schutzblende dahingehend weiterzubilden, dass die aus dem Stand der Technik bekannten Nachteile vermieden oder vermindert werden.

Die Aufgabe wird durch ein Schutzblendensystem nach Anspruch 1 gelöst.

Im Falle einer Sonnenblende eines erfindungsgemäßen Sonnenblendensystems im Dachbereich eines Fahrzeugs ist die Anordnung der Nebenbereiche der ersten Art und des Hauptbereichs dabei vorzugsweise so geartet, dass der Hauptbereich oberhalb der Sitzposition der Fahrzeuginsassen angeordnet ist, während sich der mindestens eine Nebenbereich erster Art in Form eines Streifens oder mehrerer Streifen seitlich daran anschließt oder in vollständig versteckter Art und Weise im Randbereich des Fahrzeugdachs vorgesehen ist.

Erfindungsgemäß ist eine variierende Luftdurchlässigkeit im Hauptbereich und dem Nebenbereich oder den Nebenbereichen vorgesehen. So kann im Falle einer Sonnenblende für ein offenes Dach durch eine erhöhte Luftdurchlässigkeit der Effekt vermindert werden, dass bei hohen Geschwindigkeiten die Sonnenblende ins Fahrzeug eingedrückt oder aus dem Fahrzeug herausgezogen wird und somit eine gedehnte konkave oder konvexe Form einnimmt. Da eine erhöhte Luftdurchlässigkeit im Allgemeinen jedoch auch mit einer erhöhten Lichtdurchlässigkeit und damit einer geringeren Sonnenschutzwirkung einhergeht, ist es von Vorteil, diese erhöhte Luftdurchlässigkeit in den Nebenbereichen vorzusehen, während die Luftdurchlässigkeit im Hauptbereich gering gehalten wird und eine verminderte Priorität verglichen mit der guten Sonnenschutzwirkung im Hauptbereich genießt.

Die Ausbildung als Gewirke erlaubt es, das Flächengebilde als einheitliches Bauteil zu gestalten, welches nicht erst durch Zusammenfügung verschiedener Flächenbahnen zusammengefügt werden muss. Die verschiedenen Bereiche des Gewirkes werden bei der Herstellung des Gewirkes durch eine voneinander abweichende Maschendichte oder Unterschiede im verwendeten Material hergestellt. Sie bilden gemeinsam ein besonders zuverlässiges und ästhetisch vorteilhaftes einheitliches Flächengebilde.

Flächengebilde erfindungsgemäßer Sonnenblendensysteme weisen eine Breite in Fahrzeugquerrichtung auf, die im Falle einer Sonnenblende etwa der Breite der abzudeckenden Öffnung entsprechen. So ist eine Sonnenblende zur Abdeckung eines Schiebedachs üblicherweise zwischen 0,6 m und 1,20 m breit, während eine Sonnenblende, die zur Abdeckung eines Panoramadachs vorgesehen ist, je nach Art des Fahrzeugs bis zu 2 m breit oder auch breiter sein kann. Bei einer Gepäckraumabdeckung ist die Breite so zu wählen, dass das Flächengebilde den Gepäckraum überspannen kann. Dies ist üblicherweise mit einer Breite des flexiblen Flächengebildes zwischen 0,9 m und 2 m möglich.

Das erfindungsgemäße Schutzblendensystem weist zwei in einer Auszugsrichtung, vorzugsweise einer Fahrzeuglängsrichtung, im Wesentlichen parallel verlaufenden Führungseinrichtungen und die beidseitig an den Führungseinrichtungen geführten und in Auszugsrichtung, vorzugsweise in Fahrzeuglängsrichtung verschiebbaren Schutzblende auf.

Dabei ist vorgesehen, dass im Bereich der Führungseinrichtung starre Abdeckabschnitte oberhalb und/oder unterhalb des flexiblen Flächengebildes vorgesehen sind, die sich über bzw. unter das Flächengebilde zumindest in einem Funktionszustand des Sonnenblendensystems erstrecken. Derartige Abdeckabschnitte erlauben es, eine Schutzblende mit einem Hauptbereich und Nebenbereichen zu verwenden, wobei im Falle einer Sonnenblende durch die Abdeckflächen verhindert wird, dass Sonnenlicht durch die Nebenbereiche, insbesondere die Nebenbereiche erster Art, hindurch bis in den Bereich der Fahrgäste gelangen kann. Hierdurch wird es möglich, in den Nebenbereichen, insbesondere den Nebenbereichen erster Art, das flexible Flächengebilde so auszubilden, dass es im Hinblick auf seine Luftdurchlässigkeit und Elastizität optimiert ist, wobei keine Rücksicht darauf genommen werden muss, dass diese Nebenbereiche auch im Hinblick auf die Schutzwirkung gegen Sonneneinstrahlung vorteilhaft sind. So kann insbesondere grobmaschiges textiles Material in den Nebenbereichen erster Art Verwendung finden, welches durch seine Grobmaschigkeit eine hohe Luftdurchlässigkeit und die gewünschte Elastizität bietet. Vorgesehen ist dafür, dass die Abdeckflächen sich zumindest im Funktionszustand über die Nebenbereiche des flexiblen Flächengebildes erstrecken und den Hauptbereich zumindest im Wesentlichen unbedeckt lassen.

Eine vorteilhafte Ausgestaltung des Schutzblendensystems sieht vor, dass eine sich quer zur Auszugsrichtung, insbesondere in Fahrzeugquerrichtung erstreckende Rollowelle zur Aufnahme der Schutzblende in einem partiellen oder vollständigen Stauzustand vorgesehen ist. Hierdurch wird ein besonders platzsparender Stauzustand erreicht, so dass beispielsweise eine als Sonnenblende ausgebildete Schutzblende nicht in störender Art und Weise in ihrer Stauposition zu einer ungewollten Beschattung des Fahrzeuginnenraums führt oder den Blick durch die Heckscheibe hindurch behindert.

Eine bevorzugte Ausgestaltung des beim erfindungsgemäßen Schutzblendensystem verwendeten flexiblen Flächengebildes mit verschiedenen Bereichen sieht vor, dass neben den Nebenbereichen erster Art auch mindestens ein Nebenbereich einer zweiten Art, vorzugsweise zwei Nebenbereiche einer zweiten Art, mit gegenüber dem Nebenbereich der ersten Art verringerter Elastizität und/oder Luftdurchlässigkeit vorgesehen sind. Dieser Nebenbereiche zweiter Art stimmen vorzugsweise hinsichtlich der Material- und Gewirkeigenschaften mit dem Hauptbereich überein. Die Nebenbereiche zweiter Art erlauben es, dass flexible Flächengebilde in den Randbereichen aus dichtem, belastbarem Material auszubilden, welches zur Befestigung im Bereich des Fahrzeugdachs oder eines Gepäckstauraums gut geeignet ist.

Bei einer Weiterbildung der Erfindung sind der mindestens eine Hauptbereich und der mindestens eine Nebenbereich der ersten Art sowie vorzugsweise auch der mindestens eine Nebenbereich der zweiten Art als sich in einer Auszugsrichtung, vorzugsweise in der Fahrzeuglängsrichtung, erstreckende Bereiche ausgebildet und quer zur Auszugsrichtung, vorzugsweise in Fahrzeugquerrichtung, nebeneinander angeordnet. Die Auszugsrichtung ist dabei die Richtung, in der die Schutzblende aus ihrem Stauzustand in ihren Funktionszustand bewegt werden kann. Die vorteilhafteste Ausgestaltung sieht dabei vor, dass die Auszugsrichtung die Fahrzeuglängsrichtung ist. Bei einer als Sonnenblende ausgebildeten Schutzblende ist die Sonnenblende vorzugsweise in einem Stauzustand im hinteren Bereich des Fahrzeugdachs oder hinter dem Fahrzeugdach angeordnet und kann zur Überführung in den Funktionszustand nach vorne ausgezogen werden. Durch die Gestaltung mit Hauptbereich und Nebenbereichen, die nebeneinander angeordnet sind, kann bei einer Sonnenblende in besonders vorteilhafter Art und Weise gewährleistet werden, dass der Hauptbereich im Funktionszustand und bei der Überführung in den Funktionszustand über den Plätzen der Fahrgäste angeordnet ist.

Bei einer Weiterbildung der Erfindung weist das flexible Flächengebilde drei Bereiche auf, die in der Auszugsrichtung, vorzugsweise in der Fahrzeugquerrichtung, nebeneinander angeordnet sind, wobei die zwei äußeren Bereiche Nebenbereiche erster Art sind und der innere Bereich der Hauptbereich ist. Dabei sind bei einer Auszugsrichtung, die der Fahrzeuglängsrichtung entspricht, die Nebenbereiche links- und rechtsseitig vorgesehen sind. Der Hauptbereich ist mittig dazwischen vorgesehen. Beim Überführen einer solchen Schutzblende aus ihrem Stauzustand in ihren Funktionszustand befinden sich die Nebenbereiche somit stets an der linken und rechten Außenseite. Im Falle einer Sonnenblende befinden sich die Nebenbereiche erster Art dadurch stets im Bereich der Fahrzeugsäulen, so dass gegebenenfalls durch diese Nebenbereiche in erhöhtem Maße durchscheinendes Sonnenlicht nur bei ungünstiger Einstrahlrichtung die Fahrgäste trifft.

Bei einer Alternative hierzu weist das flexible Flächengebilde fünf Bereiche auf, die quer zur Auszugsrichtung, vorzugsweise in Fahrzeugquerrichtung, nebeneinander angeordnet sind, wobei der mittlere Bereich der Hauptbereich ist, wobei die äußeren Bereich Nebenbereiche der zweiten Art sind und wobei die zwischen den äußeren Bereichen und dem mittleren Bereich liegenden Bereiche Nebenbereiche der ersten Art sind. Diese Ausgestaltung erlaubt es, die Nebenbereiche zweiter Art, die den äußeren Rand des flexiblen Flächengebildes bilden, zur sicheren Befestigung am Fahrzeug zu verwenden, beispielsweise jeweils eingeführt in Führungsschienen. Die sich innenseitig daran angrenzenden Nebenbereiche erster Art sind zur Herstellung der Elastizität und/oder Luftdurchlässigkeit zuständig. Der überwiegende Flächenanteil des Flächengebildes wird durch den Hauptbereich eingenommen, der zwischen den Nebenbereichen der ersten Art angeordnet ist. Diese Ausgestaltung bietet die Vorteile der vorstehend beschriebenen Ausgestaltung mit drei Bereichen und bietet zusätzlich eine verbesserte Möglichkeit der Befestigung des flexiblen Flächengebildes.

Das flexible Flächengebilde oder zumindest die elastische untere Schicht des Flächengebildes einer erfindungsgemäßen Schutzblende ist vorzugsweise als Maschenware oder Webware ausgebildet. Dabei sind vorzugsweise der mindestens eine Hauptbereich und der mindestens eine Nebenbereich erster Art aus unterschiedlichen Garnarten oder mit unterschiedlicher Gewirkstruktur, insbesondere mit unterschiedlicher Maschendichte hergestellt. Die Verwendung unterschiedlicher Garnarten erlaubt es, auf einfachem Weg eine unterschiedliche Elastizität des Hauptbereichs verglichen mit den Nebenbereichen erster Art oder dem Nebenbereich erster Art herzustellen. So kann im Hauptbereich ein unelastisches Garn verwendet werden, so dass gleichbleibende Eigenschaften im Hinblick auf den Sonnenschutz und die Luftdurchlässigkeit in diesem Bereich erzielt werden. In den Nebenbereichen erster Art kann hingegen ein anderes Garn verwendet werden, das insbesondere elastische Eigenschaften aufweist, so dass die Elastizität einzig oder vorwiegend durch die Nebenbereiche erreicht wird. Mit einer unterschiedlichen Gewirkstruktur kann auch bei der Verwendung gleichen Garns im Nebenbereich und im Hauptbereich ein unterschiedliches Verhalten erzielt werden. Insbesondere kann die Verwendung einer Gewirkstruktur mit geringerer Maschendichte und damit größerer Maschen im Nebenbereich erster Art zur Herstellung erhöhter Luftdurchlässigkeit und erhöhter Elastizität dienen. Im Hinblick auf die Elastizität beruht dies darauf, dass größere Maschen eine Verformbarkeit in erhöhtem Maße aufweisen, wobei der Wegfall einer Kraftbeaufschlagung, die beispielsweise durch eine hitzebedingte oder kältebedingte Verformung des Hauptbereichs bewirkt wird, eine Rückkehr der Maschen des Nebenbereichs erster Art in ihre ungestreckte Form zur Folge hat.

Besonders vorteilhaft ist es, wenn das flexible Flächengebilde zumindest im Nebenbereich erster Art aus gegen UV-Strahlung resistentem Garn hergestellt ist oder mit einer UV-Strahlung abweisenden Beschichtung versehen ist. Eine derartige Gestaltung verhindert, dass der elastische Bereich durch fortwährende Sonnenbestrahlung seine elastischen Eigenschaften einbüßt.

### Kurzbeschreibung der Zeichnungen

Weitere Vorteile und Merkmale der Erfindung ergeben sich aus den Ansprüchen sowie der nachfolgenden Beschreibung von bevorzugten Ausführungsbeispielen der Erfindung, die anhand der Zeichnungen dargestellt sind. Dabei zeigt:
- Fig. 1: ein Dachbereich eines Fahrzeugs mit einem erfindungsgemä- ßen Sonnenblendensystem,
- Fig. 2: eine detailliertere Darstellung eines Abschnitts des Sonnen- blendensystem, das in Fig. 1 dargestellt ist, und
- Fig. 3: einen Abschnitt einer zweiten Ausführungsform eines erfin- dungsgemäßen Sonnenblendensystems.

### Detaillierte Beschreibung der Ausführungsbeispiele

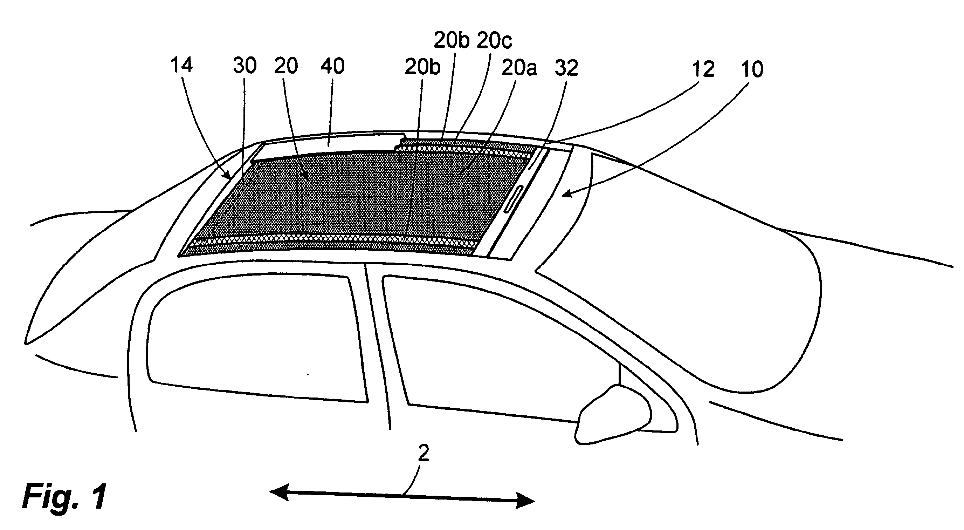

Fig. 1 zeigt ein erfindungsgemäßes Sonnenblendensystem in seiner bestimmungsgemäßen Einbausituation. Das Sonnenblendensystem 14 ist im Dachbereich eines Fahrzeugs vorgesehen. Das Dach 10 dieses Fahrzeugs weist eine annähernd die vollständige Länge und die vollständige Breite des Dachs 10 einnehmende Panoramaöffnung 12 auf. Diese Panoramaöffnung 12 ist in nicht näher dargestellter Art und Weise durch eine transparente Glasscheibe abgedeckt, die mit der Außenkarosserie im Dachbereich bündig abschließt. In der Panoramaöffnu7ng 12 ist eine Sonnenblende 20 angeordnet, die als flexibles Flächengebilde 20 mit fünf voneinander getrennten Bereichen 20a, 20b, 20c vorgesehen ist. Ein mittlerer Hauptbereich 20a nimmt dabei etwa 70% der Gesamtfläche ein. An diesen Hauptbereich 20a schließen sich bezogen auf die Fahrzeuglängsrichtung 2 beidseitig seitlich angeordnet jeweils Nebenbereiche 20b erster Art an. Hieran wiederum schließen sich streifenförmige Nebenbereiche 20c zweiter Art an.

Das flexible Flächengebilde 20 mit den Bereichen 20a, 20b, 20c weist eine durchgehende Gewirkstruktur auf, die in einem einheitlichen Vorgang herstellbar ist. So ist es möglich, das Flächengebilde 20 mit bereichsweise variierenden Eigenschaften, insbesondere mit variierender Elastizität, zu gestalten, ohne dass hierfür die einzelnen Bereiche separate gefertigt und nachfolgend miteinander verbunden werden müssen. Die Gestaltung als zusammenhängender Gewirkverbund führt zu einer besonders guten Qualität und einem ästhetisch ansprechenden Aussehen.

Die Sonnenblende 20 ist auf einer Rollowelle 30 aufrollbar, die sich am hinteren Ende der Panoramaöffnung 12 oberhalb einer Rückbank des Fahrzeugs befindet. An der der Rollowelle abgewandten Seite der Sonnenblende 20 ist ein formstabiles Abschlussteil 32 vorgesehen, welches sich annähernd über die vollständige Breite der Sonnenblende 20 erstreckt und mit dieser fest verbunden ist.

Über den Nebenbereichen 20b, 20c sind Abdeckabschnitte 40 vorgesehen, wobei in der Darstellung der Fig. 1 lediglich der linksseitige Abdeckabschnitt in geschnittener Form dargestellt ist. Der rechte Abdeckabschnitt ist zum besseren Verständnis ausgeblendet.

Die Abdeckabschnitte 40 sind fahrzeugfest und unterhalb der nicht dargestellten Panoramascheibe in der Panoramaöffnung 12 vorgesehen. Sie erstrecken sich über die komplette Länge der Panoramaöffnung 12. In Fahrzeugquerrichtung erstrecken sie sich von den äußeren Rändern der Panoramaöffnung 12 so weit in Richtung der Fahrzeugmitte hinein, dass sie die Nebenbereiche 20b, 20c vollständig abdecken, den Hauptbereich 20a der Sonnenblende 20 jedoch weitgehend unbedeckt lassen.

Die Funktionsweise des dargestellten Sonnenblendensystems wird im Folgenden beschrieben. Ausgehend von einer vollständigen Staulage, in der die Sonnenblende 20 vollständig auf der Rollowelle 30 aufgerollt ist, kann die Sonnenblende 20 anhand des formstabilen Abschlussteils 32 am vorderen Ende der Sonnenblende 20 manuell oder mittels eines Motors in Fahrzeuglängsrichtung nach vorne gezogen werden, wobei die Sonnenblende 20 von der Rollowelle 30 abgerollt wird. Die Sonnenblende 20 wird dabei im Randbereich der Nebenbereiche 20c zweiter Art seitlich geführt. Durch die Abdeckabschnitte 40 wird gewährleistet, dass im Funktionszustand, der in der Fig. 1 dargestellt ist, Sonnenlicht stets nur auf den Hauptbereich 20a der Sonnenblende 20 treffen kann, nicht jedoch auf die lichtdurchlässigen Nebenbereiche 20b.

Die Nebenbereiche 20b erster Art und der Hauptbereich 20a der Sonnenblende 20 unterscheiden sich hinsichtlich ihrer textilen Gestaltung. Im Hauptbereich 20a ist das Gewirk dicht und unelastisch, während in den Nebenbereichen 20b erster Art ein grobmaschigeres Gewirk Verwendung findet, welches elastisch streckbar ist und eine hohe Luftdurchlässigkeit gewährleistet. Die Nebenbereiche 20c zweiter Art stimmen bezüglich ihrer textilen Gestaltung mit dem Hauptbereich 20a überein. Die Ausgestaltung des Flächengebildes als Gewirk ermöglicht in besonders vorteilhafter Art und Weise diese unterschiedliche Gestaltung der verschiedenen Bereiche. So können in den Nebenbereichen 20b erster Art beispielsweise Maschen ausgelassen sein, um die Maschendichte zu verringern. Ebenfalls möglich ist es, in den Nebenbereichen 20b ein an sich elastisches Garn zu verwenden. Diese Gestaltung der Sonnenblende 20 mit verschiedenen Bereichen mit unterschiedlichen textilen Eigenschaften führt dazu, dass die Sonnenblende 20 auch nach jahrelangem Gebrauch nicht in der Mitte durchhängt, da durch die elastische Dehnbarkeit der Nebenbereiche 20b erster Art kurzzeitige Streckbelastungen nicht zu einer unerwünschten plastischen Verformung der Sonnenblende 20 führen. Darüber hinaus wird durch die Luftdurchlässigkeit der Nebenbereiche 20b gewährleistet, dass auch bei hohen Geschwindigkeiten ein Luftaustausch zwischen dem Innenbereich des Fahrzeugs und der Umgebung möglich ist, so dass die Sonnenblende bei Fahrzeugen mit offener Panoramaöffnung nicht aufgrund permanenter Druckunterschiede in das Fahrzeug hineingedrückt wird oder aus dem Fahrzeug herausgesogen wird. Die Luftdurchlässigkeit ist durch die grobmaschigen Nebenbereiche 20b sowie einen Abstand zwischen den Abdeckabschnitten 40 und der Sonnenblende 20 gewährleistet. Durch die Nebenbereiche 20c zweiter Art ist eine sichere Führung und Befestigung der Sonnenblende 20 im Randbereich möglich.

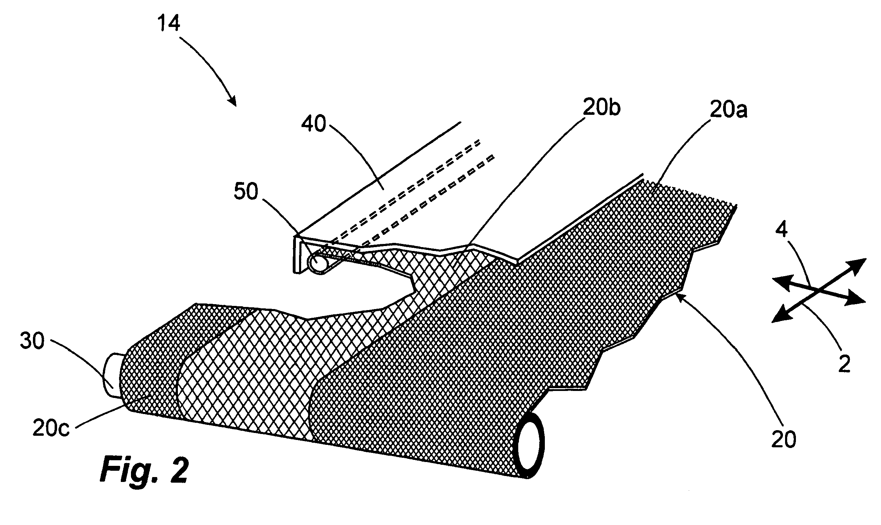

Fig. 2 zeigt einen Teil des in Fig. 1 dargestellten Sonnenblendensystems in einer vergrößerten Darstellung. Es handelt sich um einen Abschnitt des symmetrisch ausgebildeten Sonnenblendensystems 14, der in der linken Seite im Heckbereich des Fahrzeugdachs angeordnet ist.

Zu erkennen ist, dass die Sonnenblende 20 mit ihrem Hauptbereich 20a und dem einen dargestellten Nebenbereich 20b erster Art sowie dem dargestellten Nebenbereich 20c partiell auf der Rollowelle 30 aufgerollt ist. Beim Abrollen der Sonnenblende 20 von der Rollowelle 30 wird der sich an den Nebenbereich 20b erster Art anschließende Nebenbereich 20c zweiter Art kontinuierlich um ein Führungselement 50 in Form einer Führungsstange 50 gelegt und entlang dieser Führungsstange 50 weiter nach vorne geführt. Es ist weiterhin zu erkennen, dass die Abdeckabschnitte 40 sowohl die Führungsstange 50 als auch die Nebenbereiche 20b, 20c der Sonnenblende 20 vollständig überspannen. Um einen Luftaustausch zwischen dem Fahrzeuginnenraum und der Umgebung zu gewährleisten, ist allerdings ein Abstand zwischen der Oberfläche der Nebenabschnitte 20b und dem Abdeckabschnitt 40 vorgesehen.

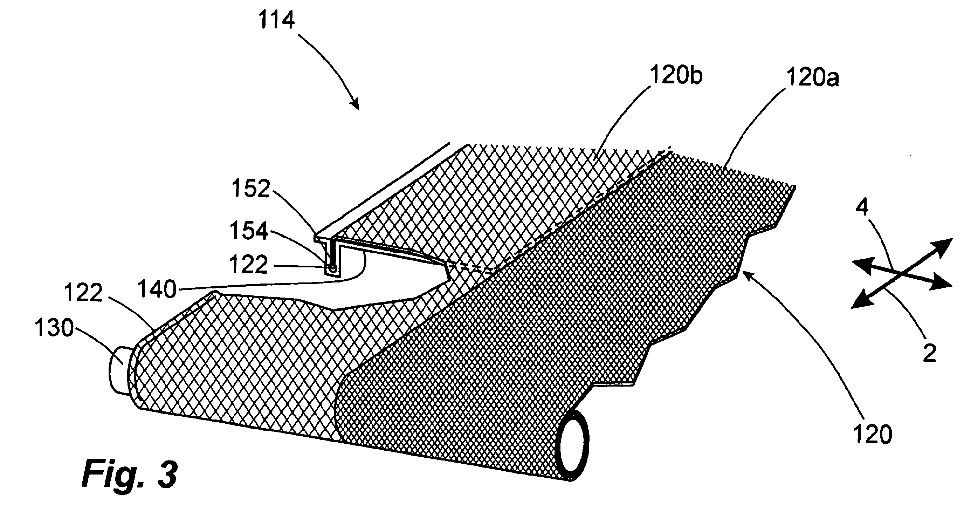

Fig. 3 zeigt eine alternative Ausgestaltung eines Sonnenblendensystems, wobei, wie bei der Fig. 2, nur ein Ausschnitt aus dem linksseitigen Heckbereich der Sonnenblendensystems 114 dargestellt ist. Abweichend von der Ausführungsform der Fig. 2 sind bei dieser alternativen Ausführungsform die Führungseinrichtung zur Führung der Sonnenblende 120 und der Abdeckabschnitt 140 als ein Bauteil ausgebildet. Die Gestaltung sieht vor, dass sich außenseitig an einen Abdeckabschnitt 140 eine nach oben offene Nut 152 anschließt, die in ihrem Nutgrund eine Aufweitung 154 aufweist. Abweichend von der Ausführungsform der Fig. 1 und 2 ist die Sonnenblende 120 wiederum als einheitliches Gewirk aufgebaut, weist jedoch neben dem Hauptbereich 120a lediglich Nebenbereiche 120b erster Art auf, welche damit auch den äußeren Rand der Sonnenblende 20 bilden. Im Bereich dieser Nebenbereiche 120b ist jeweils eine Verdickung 122 vorgesehen, die so bemessen ist, dass sie in die Aufweitung 154 e
inführbar ist, nicht jedoch durch den oberen Abschnitt der Nut 152 hindurch passt. Beim Abrollen der Sonnenblende 120 von der Rollowelle 130 werden in nicht näher dargestellter Art und Weise die Verdickungen 122 beidseitig der Sonnenblende 120 in die Aufweitung 154 der Nut 152 sowie die korrespondierende Nut auf der anderen Seite der Sonnenblende eingeführt, so dass die Sonnenblende beidseitig sicher geführt ist.

Abweichend von der Ausführungsform der Fig. 1 und 2 sind die Abdeckabschnitte 140 nicht oberhalb der Nebenbereiche 120b vorgesehen, sondern liegen unterhalb der Nebenbereiche 120b. Des Weiteren liegen die Nebenbereiche 120b der Sonnenblende 120 auf den Abdeckabschnitten 140 unmittelbar auf, so dass ein Luftaustausch durch die Nebenbereiche 120b nicht möglich ist, bzw. eine besondere Ausgestaltung der Abdeckabschnitte 140 erfordert.

## Patentansprüche

1. Schutzblendensystem (14) für ein Fahrzeug, insbesondere für ein Fahrzeugdach (10) oder einen Gepäckstauraum, mit
- zwei in einer Auszugrichtung (2), vorzugsweise in Fahrzeuglängsrichtung (2), im Wesentlichen parallel verlaufenden Führungseinrichtungen (50) und
- einer beidseitig an den Führungseinrichtungen (50) geführten und in Auszugrichtung, vorzugsweise in Fahrzeuglängsrichtung, verschiebbaren Schutzblende,
wobei die Schutzblende als flexibles Flächengebilde (20) und zur Befestigung im Bereich des Fahrzeugdachs oder eines Gepäckstauraums ausgebildet ist,
**dadurch gekennzeichnet, dass**
das flexible Flächengebilde (20) als Gewirke mit
- mindestens einem Hauptbereich (20a), vorzugsweise genau einem Hauptbereich (20a), mit geringerer Luftdurchlässigkeit und
- mindestens einem Nebenbereich (20b) einer ersten Art, vorzugsweise zwei Nebenbereichen (20b) einer ersten Art, mit höherer Luftdurchlässigkeit als der Hauptbereich
ausgebildet ist, wobei im Bereich der Führungseinrichtungen (50) starre Abdeckabschnitte (40) oberhalb und/oder unterhalb des flexiblen Flächengebildes (20) vorgesehen sind, die sich über bzw. unter das Flächengebilde (20) erstrecken und die sich über die Nebenbereiche (20b) der ersten Art des flexiblen Flächengebildes (20) erstrecken und den Hauptbereich (20a) zumindest im Wesentlichen unbedeckt lassen, wobei durch einen Abstand zwischen dem Abdeckabschnitt (40) und dem Nebenbereich (20b) der ersten Art ein Luftaustausch durch das flexible Flächengebilde (20) ermöglicht wird.

2. Schutzblendensystem nach Anspruch 1,
**gekennzeichnet durch**
eine sich quer zur Auszugsrichtung (2), vorzugsweise in Fahrzeugquerrichtung (4), erstreckende Rollowelle (30) zur Aufnahme des flexiblen Flächengebildes (20) in einem partiellen oder vollständigen Stauzustand.

3. Schutzblendensystem nach einem der vorstehenden Ansprüche,
**dadurch gekennzeichnet, dass**
das flexible Flächengebilde (20) mindestens einen Nebenbereich (20c) einer zweiten Art, vorzugsweise zwei Nebenbereich (20c) einer zweiten Art mit gegenüber dem Nebenbereich (20b) der ersten Art verringerter Elastizität und/oder Luftdurchlässigkeit aufweist.

4. Schutzblendensystem nach Anspruch 3,
**dadurch gekennzeichnet, dass**
der mindestens eine Nebenbereich (20c) der zweiten Art bezüglich seiner Material- und Gewirkeigenschaften mit dem Hauptbereich (20a) übereinstimmt.

5. Schutzblendensystem nach einem der vorstehenden Ansprüche,
**dadurch gekennzeichnet, dass**
der mindestens eine Hauptbereich und der mindestens eine Nebenbereich der ersten Art sowie vorzugsweise der mindestens eine Nebenbereich der zweiten Art als sich in einer Auszugsrichtung, vorzugsweise in Fahrzeuglängsrichtung, erstreckende Bereiche ausgebildet sind und quer zur Auszugsrichtung, vorzugsweise in Fahrzeugquerrichtung, nebeneinander angeordnet sind.

6. Schutzblendensystem nach einem der vorstehenden Ansprüche,
**dadurch gekennzeichnet, dass**
das flexible Flächengebilde (20) drei Bereiche (20a, 20b) aufweist, die quer zur Auszugsrichtung (2), vorzugsweise in Fahrzeugquerrichtung (4), nebeneinander angeordnet sind, wobei die zwei äußeren Bereiche (20b) Nebenbereiche (20b) erster Art sind und der innere Bereich (20a) der Hauptbereich (20a) ist.

7. Schutzblendensystem nach einem der vorstehenden Ansprüche,
**dadurch gekennzeichnet, dass**
das flexible Flächengebilde (20) fünf Bereiche (20a, 20b, 20c) aufweist, die quer zur Auszugsrichtung (2), vorzugsweise in Fahrzeugquerrichtung (4), nebeneinander angeordnet sind, wobei der mittlere Bereich (20a) der Hauptbereich (20a) ist, wobei die äußeren Bereich (20c) Nebenbereiche (20c) der zweiten Art sind und wobei die zwischen den äußeren Bereichen (20c) und dem mittleren Bereich (20a) liegenden Bereiche Nebenbereiche (20b) der ersten Art sind.

8. Schutzblendensystem nach einem der vorstehenden Ansprüche,
**dadurch gekennzeichnet, dass**
das flexible Flächengebilde (20) bzw. die erste Schicht des flexiblen Flächengebildes als Maschenware oder Webware ausgebildet ist.

9. Schutzblendensystem nach einem der vorstehenden Ansprüche,
**dadurch gekennzeichnet, dass**
der mindestens eine Hauptbereich (20a) und der mindestens eine Nebenbereich (20b) der ersten Art aus unterschiedlichen Garnen oder mit unterschiedlicher Gewirkstruktur, insbesondere mit unterschiedlicher Maschendichte, hergestellt sind.

10. Schutzblendensystem nach einem der vorstehenden Ansprüche,
**dadurch gekennzeichnet, dass**
das flexible Flächengebilde (20) zumindest im Nebenbereich (20b) erster Art aus für UV-Strahlung resistentem Garn hergestellt ist oder mit einer UV-Strahlung abweisenden Beschichtung versehen ist.

## Claims

1. Protective screen system (14) for a vehicle, in particular for a vehicle roof (10) or a luggage compartment, with
- two essentially parallel guide mechanisms (50) aligned in a direction of extension (2), favourably in the longitudinal direction of the vehicle (2),
- a protective screen guided on both sides by the guide mechanisms (50) that can be moved in the direction of extension, favourably in the longitudinal direction of the vehicle,
whereby the protective screen is formed as a flexible fabric sheet (20) for fastening in the area of the vehicle roof or of a luggage compartment, **characterised in that**
the flexible fabric sheet (20) is formed as a knitted fabric with
- at least one main area (20a), favourably exactly one main area (20a) with a low air permeability and
- at least one neighbouring area (20b) of a first type, favourably two neighbouring areas (20b) of a first type with a higher air permeability than the main area,
whereby in the area of the guide mechanisms (50) rigid covering pieces (40) are provided above and/or below the flexible fabric sheet (20) extending over or under the fabric sheet (20) and which extend over the neighbouring areas (20b) of the first type of the flexible fabric sheet (20) and leave the main area (20a) at least substantially uncovered, whereby an exchange of air through the flexible fabric sheet (20) is enabled through a space between the covering piece (40) and the neighbouring area (20b) of the first type.

2. Protective screen system according to Claim 1,
**characterised by**
a roller shaft (30) extending transversely to the direction of extraction (2), favourably in the transverse direction of the vehicle (4) to hold the flexible fabric sheet (20) in a partially or completely stowed condition.

3. Protective screen system according to one of the foregoing claims,
**characterised in that**
the flexible fabric sheet (20) incorporates at least one neighbouring area (20c) of a second type, favourably two neighbouring areas (20c) of a second type, having lower elasticity and/or air permeability than the neighbouring area (20b) of the first type.

4. Protective screen system according to Claim 3,
**characterised in that**
the characteristics of the minimum of one neighbouring area (20c) of the second type in terms of its material and its knit are the same as that of the main area (20a).

5. Protective screen system according to one of the foregoing claims,
**characterised in that**
the minimum of one main area and the minimum of one neighbouring area of the first type, as well as favourably the minimum of one neighbouring area of the second type are formed as areas extending in a direction of extraction, favourably in the longitudinal direction of the vehicle, and are arranged adjacent to one another in the direction transverse to the direction of extraction, favourably in the transverse direction of the vehicle.

6. Protective screen system according to one of the foregoing claims,
**characterised in that**
the flexible fabric sheet (20) incorporates three areas (20a, 20b) that are arranged next to one another in the direction transverse to the direction of extraction (2), favourably in the direction transverse to the vehicle (4), whereby the two outer areas (20b) are neighbouring areas (20b) of the first type, and the inner area (20a) is the main area (20a).

7. Protective screen system according to one of the foregoing claims,
**characterised in that**
the flexible fabric sheet (20) incorporates five areas (20a, 20b, 20c) that are arranged next to one another in the direction transverse to the direction of extraction (2), favourably in the direction transverse to the vehicle (4), whereby the central area (20a) is the main area (20a), whereby the outer areas (20c) are outer areas (20c) of the second type and whereby the areas located between the outer areas (20c) and the central area (20a) are neighbouring areas (20b) of the first type.

8. Protective screen system according to one of the foregoing claims,
**characterised in that**
the flexible fabric sheet (20), or the first layer of the flexible fabric sheet, is constituted of knitted or woven material.

9. Protective screen system according to one of the foregoing claims,
**characterised in that**
the minimum of one main area (20a) and the minimum of one neighbouring area (20b) of the first type are manufactured from different yarns or with a different mesh structure, in particular having different mesh densities.

10. Protective screen system according to one of the foregoing claims,
**characterised in that**
the flexible fabric sheet (20) is manufactured, at least in the neighbouring area (20b) of the first type, from a yarn that is resistant to UV radiation, or is given a coating that protects against UV radiation.

## Revendications

1. Système de recouvrement de protection (14) pour un véhicule, en particulier pour un toit de véhicule (10) ou un compartiment à bagages, comprenant
- deux dispositifs de guidage (50) parallèles pour l'essentiel s'étendant dans un sens de déroulement (2), de préférence dans le sens longitudinal du véhicule (2), et
- un recouvrement de protection guidé des deux côtés sur les dispositifs de guidage (50) et déplaçable dans le sens de déroulement, de préférence dans le sens longitudinal du véhicule,
le recouvrement de protection étant formé par une structure plane souple (20) destinée à être fixée dans la zone du toit du véhicules ou d'un compartiment à bagages,
**caractérisé en ce**
**que** la structure plane souple (20) est formée par un matériau à mailles comprenant
- au moins une partie principale (20a), de préférence une seule partie principale (20a), avec une faible perméabilité à l'air
et
- au moins une partie annexe (20b) d'un premier type, de préférence deux parties annexes (20b) d'un premier type, avec une perméabilité à l'air supérieure à celle de la partie principale
sachant que dans la zone des dispositifs de guidage (50) sont prévues au-dessus et/ou au-dessous de la structure plane souple (20) des sections de recouvrement rigides (40) qui s'étendent au-dessus et/ou au-dessous de la structure plane (20) ainsi qu'au-dessus des parties annexes (20b) du premier type de la structure plane souple (20), et laissent la partie principale (20a) découverte au moins pour l'essentiel, un intervalle entre la section de recouvrement (40) et la partie annexe (20b) du premier type permettant un échange d'air à travers la structure plane souple (20).

2. Système de recouvrement de protection selon la revendication 1,
**caractérisé par**
un arbre de store (30) s'étendant transversalement par rapport au sens de déroulement (2), de préférence dans le sens transversal du véhicule (4), et destiné à loger la structure plane souple (20) dans un état de rangement partiel ou total.

3. Système de recouvrement de protection selon l'une des revendications précédentes,
**caractérisé en ce**
**que** la structure plane souple (20) présente au moins une partie annexe (20c) d'un second type, de préférence deux parties annexes (20c) d'un second type, ayant une élasticité et/ou une perméabilité à l'air réduite(s) par rapport à la partie annexe (20b) du premier type.

4. Système de recouvrement de protection selon la revendication 3,
**caractérisé en ce**
**que** l'au moins une partie annexe (20c) du second type est conforme à la partie principale (20a) en ce qui concerne ses caractéristiques de matériau et de maillage.

5. Système de recouvrement de protection selon l'une des revendications précédentes,
**caractérisé en ce**
**que** l'au moins une partie principale et l'au moins une partie annexe du premier type ainsi que de préférence l'au moins une partie annexe du second type sont formées en tant que parties s'étendant dans un sens de déroulement, de préférence dans le sens longitudinal du véhicule, et sont disposées côte à côte transversalement par rapport au sens de déroulement, de préférence dans le sens transversal du véhicule.

6. Système de recouvrement de protection selon l'une des revendications précédentes,
**caractérisé en ce**
**que** la structure plane souple (20) présente trois parties (20a, 20b) qui sont disposées côte à côte transversalement par rapport au sens de déroulement (2), de préférence dans le sens transversal du véhicule (4), les deux parties extérieures (20b) étant des parties annexes (20b) du premier type et la partie interne (20a) étant la partie principale (20a).

7. Système de recouvrement de protection selon l'une des revendications précédentes,
**caractérisé en ce**
**que** la structure plane souple (20) présente cinq parties (20a, 20b, 20c) qui sont disposées côte à côte transversalement par rapport au sens de déroulement (2), de préférence dans le sens transversal du véhicule (4), sachant que la partie médiane (20a) est la partie principale (20a), que les parties extérieures (20c) sont des parties annexes (20c) du second type, et que les parties situées entre les parties extérieures (20c) et la partie médiane (20a) sont des parties annexes (20b) du premier type.

8. Système de recouvrement de protection selon l'une des revendications précédentes,
**caractérisé en ce**
**que** la structure plane souple (20) ou la première couche de la structure plane souple est formée par un produit tissé ou un produit maillé.

9. Système de recouvrement de protection selon l'une des revendications précédentes,
**caractérisé en ce**
**que** l'au moins une partie principale (20a) et l'au moins une partie annexe (20b) du premier type sont confectionnées avec des fils différents ou avec des structures de maillage différentes, en particulier avec des taux de mailles différents.

10. Système de recouvrement de protection selon l'une des revendications précédentes,
**caractérisé en ce**
**qu'**au moins dans la partie annexe (20b) du premier type, la structure plane souple (20) est confectionnée avec un fil résistant au rayonnement UV ou est munie d'un revêtement repoussant le rayonnement UV.
